# EUROPEAN PATENT APPLICATION

(11) **EP 1 562 245 A1**
(43) Date of publication of application: **10.08.2005**
(21) Application number: 02779998.0
(22) Date of filing: 05.11.2002
(51) Int. Cl.: H01M 8/04, C09K 5/00

(54) **FUEL CELL COOLANT**

(71) Applicant: Shishiai-Kabushikigaisha, Seki-shi, Gifu 501-3923 (JP)
(72) Inventor: EGAWA, Hiroshi, c/o Shishiai-Kabushikigaisha, Seki-shi, Gifu 501-3923 (JP); ITO, Naoshi, c/o Shishiai-Kabushikigaisha, Seki-shi, Gifu 501-3923 (JP)
(74) Representative: Raynor, Simon Mark
(86) International application number: PCT/JP2002/011541
(87) International publication number: WO 2004/042856

(57) **Abstract**

The present invention relates to a coolant used for cooling a fuel cell and in particular, a fuel cell for a vehicle, and the composition is **characterized in** using as a basic material one or more materials selected from a group consisting of secondary alcohols, tertiary alcohols, and derivatives of secondary or tertiary alcohols, or a solution thereof, the composition being superior in the low conductivity and anti-freeze properties and capable of maintaining the low conductivity even when used for a long period of time.

## Description

### Technical Field

The present invention relates to a coolant composition used for cooling a fuel cell and in particular, a fuel cell for a vehicle, and more particularly to a coolant composition for a fuel cell which has a low conductivity and an excellent anti-freeze characteristic and can maintain the low conductivity even when used for a long period of time.

### Background Art

A fuel cell is generally constituted of a stack having a multi-layer structure in which a single cell as a power generation unit and a separator are alternately superposed. Further, since heat is generated from the stack at the time of generation of electricity, a cooling plate which cools the stack every several cells is inserted in order to maintain a stack temperature at a fixed value. A coolant path is formed in the cooling plate, the stack is cooled when the coolant flows through this path.

Since the coolant for a fuel cell circulates in the stack executing generation of electricity to cool the stack in this manner, when an electric conductivity of the coolant is high, the electricity generated in the stack flows toward the coolant side so that the electricity is lost, thus reducing an electricity generating capacity in the fuel cell.

Therefore, as the conventional coolant for a fuel cell, there has been used pure water which has a low conductivity, in other words, high electric insulation in order to prevent the electricity from leaking to the outside of the stack.

However, in case of an intermittent working type fuel cell such as a fuel cell for a vehicle, a temperature of a coolant is lowered to an ambient temperature when this cell is not working. In particular, when there is a possibility that such a cell is used at a temperature of the freezing point or less, pure water is frozen, and there is a fear that cell performances of the fuel cell may be deteriorated. For example, a cooling plate may be damaged due to volume expansion of the coolant.

Further, considering a cooling system using, e.g., a fuel cell for a vehicle, it can be expected that an aluminum-based material is used for a cooling plate or a heat exchanger from the viewpoint of a reduction in weight. An aluminum-based material has poor antirust properties, is apt to cause corrosion. When corrosion is caused, the conductivity is increased.

Consequently, the low conductivity, anti-freeze characteristics and antirust properties are demanded for a fuel cell and, in particular a fuel cell for a vehicle.

Furthermore, as another conventional coolant for a fuel cell, there is one disclosed in Japanese Patent Application Laid-open No. 2000-164244. In this coolant, an addition agent such as alkylglucoside is added in a base material so that the conductivity of the coolant is maintained as a low conductivity.

In this coolant, however, even if an addition agent such as alkylglucoside is added in a base material, this addition is not enough to maintain the conductivity of the coolant as a low conductivity in a use for a long period of time.

The present inventor has brought the present invention to completion as a result of devotion to study for solving the above-described technical problem. That is, it is an object of the present invention to provide a coolant composition for a fuel cell which has a low conductivity and an excellent anti-freeze characteristic and can maintain the low conductivity even when used for a long period of time.

It is another object of the present invention to provide a coolant composition for a fuel cell which has a low conductivity and excellent anti-freeze and antirust characteristics and can maintain the low conductivity even when used for a long period of time.

### Disclosure of the Invention

A coolant composition for a fuel cell (which will be simply referred to as a composition hereinafter) according to the present invention will now be described hereinafter. The composition according to the present invention relates to a coolant composition used for cooling a fuel cell and in particular, a fuel cell for a vehicle, and is characterized in using as a basic material one or more materials selected from a group consisting of secondary alcohols, tertiary alcohols, and derivatives of secondary or tertiary alcohols, or a solution thereof.

As the basic material in the coolant composition used for cooling a fuel cell, one which has a low conductivity and an excellent anti-freeze characteristic is demanded. In the composition according to the present invention, as a base material meeting such a demand, a base material constituted of one or more materials selected from a group consisting of secondary alcohols, tertiary alcohols, and derivatives of secondary or tertiary alcohols, or a solution thereof has been used.

The basic material has the low conductivity and the excellent anti-freeze characteristic and demonstrates excellent effect and advantage that an increase in conductivity is small even when used for a long period of time, and it is possible to cite as preferred examples one or more materials selected from a group consisting of a monohydric alcohol of secondary alcohols or tertiary alcohols, a polyhydric alcohol of secondary alcohols or tertiary alcohols and derivatives thereof among the secondary alcohols, the tertiary alcohols, and the derivatives of secondary or tertiary alcohols.

As a monohydric alcohol of secondary alcohols or tertiary alcohols, it is possible to cite any one of, e.g., 2-propanol, 2-butanol, tert-butanol, 2-pentanol, 3-pentanol, 2-methyl-2-propanol, 3-methyl-2-propanol, 2-hexanol, 3-hexanol, 2-methyl-2-pentanol, 3-methyl-2-pentanol, 4-methyl-2-pentanol, 2-methyl-3-pentanol, 3-methyl-3-pentanol, 2-heptanol, 3-heptanol, 4-heptanol, 2-octanol, 3-octanol, and 4-octanol.

As a polyhydric alcohol of secondary alcohols or tertiary alcohols, or a derivative thereof, it is possible to cite any one of, e.g., 1,2-propanediol, glycerin, 1,2-butanediol, 1,3-butanediol, 2,3-butanediol, 1,2,3-butanetriol, 1,2,4-butanetriol, 2-methyl-1,2-propanediol, 2-methyl-1,2,3-propanetriol, 1,2-pentanediol, 1,3-pentanediol, 1,4-pentanediol, 2,3-pentanediol, 2,4-pentanediol, 2-methyl-1,2-butanediol, 3-methyl-1,2-butanediol, 2-methyl-1,3-butanediol, 3-methyl-1,3-butanediol, 2-methyl-2,3-butanediol, polyisopropylene glycol, polyisobutylene glycol, poly-1-methyl-1,3-propanediol, and methyl, ethyl, propyl, buthyl, pentyl, or hexyl ether thereof, and formic, methyl, ethyl, propyl, butyl, pentyl, or hexyl ester thereof.

Among polyhydric alcohols of secondary alcohols or tertiary alcohols, 2,3-butanediol, 2,3-pentanediol, 2,4-pentanediol, and 2-methyl-2,3-butanediol are preferable since these materials have a small increase in conductivity like the monohydric alcohols of secondary alcohols or tertiary alcohols.

Furthermore, the basic material in the composition according to the present invention may take as another mode both one or more materials selected from monohydric alcohols of secondary alcohols or tertiary alcohols, and one or more materials selected from polyhydric alcohols of secondary alcohols or tertiary alcohols or derivatives thereof.

Moreover, an antirust addition agent may be contained in the composition according to the present invention. The antirust addition agent is not restricted to a certain type, and a conventionally known antirust addition agent can be used, but one which can maintain a conductivity of the composition at 10 µS/cm or below and maintain a fluctuation in conductivity in a range of 0 to 10 µS/cm even when used for a long period of time is desirable.

As such an antirust addition agent, it is possible to cite a material which suppresses oxidation of the basic material to prevent the conductivity of the coolant composition from increasing, or a material which blocks ions eluting in the cooling system to prevent the conductivity of the coolant composition from increasing.

As the material which suppresses oxidation of the basic material to prevent the conductivity from increasing, it is possible to cite, e.g., a phenolic compound consisting of one or more materials selected from phenol sulfonate, chlorophenol, nitrophenol, bromophenol, aminophenol, dihydroxy benzene, oxyn, hydroxy acetophenone, methoxyphenol, 2,6-di-tert-butyl-p-cresol, tert-butyl-4-methoxyphenol, 2,6-di-tert-butyl-4-ethylphenol, 4,4-butylidenebis-(3-methyl-6-tert-butylphenol), 2,2-methylenebis-(4-methyl-6-tert-butylphenol), 2,2-bis(p-hydroxyphenyl)propane.

As the material which blocks ions to prevent the conductivity from increasing, it is possible to cite one of a hydrocarbon carbonyl compound, an amidic compound, an imidic compound and a diazolic compound.

As a hydrocarbon carbonyl compound, it is possible to cite, e.g., a compound consisting of one or more materials selected from 2,4-pentanedione, 3-methyl-2,4-pentanedion, 3-ethyl-2,4-pentanedion, 3-propyl-2,4-pentanedione, 3-n-butyl-2,4-pentanedion, 2,3-heptanedione, 2,5-hexanedione, phthalaldehyde, benzaldehyde, dihydroxybenzaldehyde, pentanone, 2-acetylcyclopentanone, cyclohexanone, cyclohexanedione, 2,2,6,6-tetramethyl-3,5-heptanedione.

As an amidic compound, it is possible to cite, e.g., a compound consisting of one or more materials selected from benzamide, methylbenzamide, nicotinic acid amide, picolinic acid amide, anthranilamide, succinic acid amide, oxalic acid diamide, acetamide, 2-pyrrolidone, caprolactam.

As an imidic compound, it is possible to cite, e.g., a compound consisting of one or more materials selected from succinimide, phthalimide, maleimide, glutamimide, 1,8-naphthalimide, alloxan, purpuric acid.

As a diazolic compound, it is possible to cite, e.g., a compound consisting of one or more materials selected from imidazoline, 1,3-diazole, mercaptoimidazoline, mercaptoimidazole, benzimidazole, mercaptobenzimidazole, methylimidazole, dimethylimidazole, imidazole-4,5-dicarboxylic acid, 1,2-diazole, methylpyrazole.

As a content of the antirust addition agent, it is desirable to set the content to fall within a range of 0.001 to 10.0 weight% with respect to the basic material. If the content of the antirust addition agent is smaller than the above-described range, the sufficient antirust properties cannot be obtained, and if the content of the antirust addition agent exceeds the above-described range, an effect corresponding to an increased content cannot be obtained, which is uneconomical.

It is to be noted that, for example, antifoaming agent, a coloring agent or the like may be contained as well as the above-described components in the composition according to the present invention, or molybdate, tungstate, hydrosulfate, nitrate, benzoate and the like which are other conventionally known antirust addition agents may be also used as long as the low conductivity of the composition is not obstructed.

### Best Mode for Carrying Out the Invention

The composition according to the present invention will now be described in further detail hereinafter with reference to embodiments. In the following Table 1, Embodiments 1 to 4 as preferred embodiments of the composition according to the present invention are shown, and a material containing ion-exchange water as a basic material and having ethanediol added thereto in order to provide anti-freeze properties (Comparative Example 1), a material having 1-propanol added in ion-exchange water (Comparative Example 2), a material having 1,4-butanediol added in ion-exchange water (Comparative Example 3), a material having ethylene glycol added in ion-exchange water and alkylglucoside added in order to maintain the conductivity of the composition at a low conductivity (Comparative Example 4) and ion-exchange water only as a prior art (Comparative Example 5) are cited.

**Table 1**

| (weight%) | | | | | | | | | |
|---|---|---|---|---|---|---|---|---|---|
| Item/ Embodiment | Embodiment 1 | Embodiment 2 | Embodiment 3 | Embodiment 4 | Compara tive example 1 | Comparative example 2 | Comparative example 3 | Comparative example 4 | Comparative example 5 |
| Ethylene glycol | - | - | - | - | 50 | - | - | 50 | - |
| Ion-exchange water | 50 | 50 | 49.9 | 50 | 50 | 50 | 50 | 49.9 | 100 |
| 2-propanol | 50 | - | - | 35 | - | - | - | - | - |
| 1-propanol | - | - | - | - | - | 50 | - | - | - |
| 1,3-butanediol | - | 50 | 50 | 7.5 | - | - | - | - | - |
| 1,4-butanediol | - | - | - | - | - | - | 50 | - | - |
| 3-pentanol - | | - | - | 7.5 | - | - | - | - | - |
| Alkylgluco side | - | - | 0.1 | - | - | - | - | 0.1 | - |
| Total | 100 | 100 | 100 | 100 | 100 | 100 | 100 | 100 | 100 |

In regard to each composition in Embodiments 1 to 4 and Comparative examples 1 to 5, the conductivity (µS/cm), the conductivity (µS/cm) after an endurance test, and a freezing temperature (°C) were measured. Table 2 shows results of this measurement. It is to be noted that a solution temperature of a coolant which cools a fuel cell is approximately 80°C, but each composition was heated to 120°C in the endurance test for the purpose of acceleration and the conductivity after 168 hours was measured in regard to the measurement of the conductivity after the endurance test.

**Table 2**

| Item/ Embodimen t | Embodiment 1 | Embodiment 2 | Embodiment 3 | Embodiment 4 | Comparative example 1 | Comparative example 2 | Comparative example 3 | Comparative example 4 | Comparative example 5 |
|---|---|---|---|---|---|---|---|---|---|
| Conductiv ity (µS/cm) | 0.2 | 0.2 | 0.2 | 0.2 | 0.3 | 0.3 | 0.3 | 0.3 | 0.7 |
| Conductiv ity after endurance test (µS/cm) | 2 | 26 | 27 | 12 | 50 | 55 | 64 | 66 | 9 |
| Freezing temperatu re (°C) | Not greater than -20 | Not greater than -20 | Not greater than -20 | Not greater than -20 | Not greater than -30 | Not greater than -20 | Not greater than -20 | Not greater than -35 | 0 |

It was confirmed from Table 2 that the conductivity after the endurance test of each composition using secondary alcohols or tertiary alcohols in Embodiment 1 and Embodiment 2 has a small increase in conductivity and maintains the low conductivity even when used for a long period of time as compared with each composition using primary alcohols in Comparative examples 1 to 3. Further, in comparison with the composition in Comparative example 4 as a prior art which maintains the conductivity of the composition as a low conductivity, it was confirmed that the composition having the same addition agent added thereto in Embodiment 3 demonstrates a small increase in conductivity and the composition concerning Embodiment 3 is superior in low conductivity when used for a long period of time as compared with the prior art. Furthermore, as shown in Comparative example 5, it was confirmed that the composition consisting of the ion-exchange water only has a small increase in conductivity but a high freezing temperature of 0°C and there is a fear that a problem may possibly occur when used in a cold district. On the other hand, in case of the compositions in Embodiments 1 to 4, it was confirmed that these compositions all have freezing temperatures which are not greater than 0°C and can be sufficiently used in a cold district.

### Advantage of the Invention

Since the composition according to the present invention contains as a basic material one or more materials selected from a group consisting of secondary alcohols, tertiary alcohols, and derivatives of secondary alcohols or tertiary alcohols, or a solution thereof, it is superior in low conductivity and anti-freeze properties and can maintain the low conductivity even when used for a long period of time.

## Claims

1. A coolant composition for a fuel cell which cools a fuel cell, wherein the coolant composition comprises as a basic material one or more materials selected from the group consisting of secondary alcohols, tertiary alcohols, and derivatives of secondary alcohols or tertiary alcohols, and aqueous solutions thereof, and maintains the low conductivity even when used for a long period of time.

2. The coolant composition for a fuel cell according to claim 1, wherein the basic material is one or more materials selected from monohydric alcohols of secondary alcohols or tertiary alcohols.

3. The coolant composition for a fuel cell according to claim 2, wherein the monohydric alcohol of secondary alcohols or tertiary alcohols is one of 2-propanol, 2-butanol, tert-butanol, 2-pentanol, 3-pentanol, 2-methyl-2-propanol, 3-methyl-2-propanol, 2-hexanol, 3-hexanol, 2-methyl-2-pentanol, 3-methyl-2-pentanol, 4-methyl-2-pentanol, 2-methyl-3-pentanol, 3-methyl-3-pentanol, 2-heptanol, 3-heptanol, 4-heptanol, 2-octanol, 3-octanol, and 4-octanol.

4. The coolant composition for a fuel cell according to claim 1, wherein the basic material is one or more materials selected from the group consisting of polyhydric alcohols of secondary alcohols or tertiary alcohols, and derivatives thereof.

5. The coolant composition for a fuel cell according to claim 4, wherein the polyhydric alcohol of secondary alcohols or tertiary alcohols, or the derivative thereof is one of 1,2-propanediol, glycerin, 1,2-butanediol, 1,3-butanediol, 2,3-butanediol, 1,2,3-butanetriol, 1,2,4-butanetriol, 2-methyl-1,2-propanediol, 2-methyl-1,2,3-propanetriol, 1,2-pentanediol, 1,3-pentanediol, 1,4-pentanediol, 2,3-pentanediol, 2,4-pentanediol, 2-methyl-1,2-butanediol, 3-methyl-1,2-butanediol, 2-methyl-1,3-butanediol, 3-methyl-1,3-butanediol, 2-methyl-2,3-butanediol, polyisopropylene glycol, polyisobutylene glycol, poly-1-methyl-1,3-propanediol, and methyl, ethyl, propyl, buthyl, pentyl, or hexyl ether thereof, and formic, methyl, ethyl, propyl, butyl, pentyl, or hexyl ester thereof.

6. The coolant composition for a fuel cell according to claim 4, wherein the polyhydric alcohol of secondary alcohols or tertiary alcohols is one of 2,3-butanediol, 2,3-pentanediol, 2,4-pentanediol, and 2-methyl-2,3-butanediol.

7. The coolant composition for a fuel cell according to claim 1, wherein the basic material comprises one or more materials selected from monohydric alcohols of secondary alcohols or tertiary alcohols, and one or more materials selected from polyhydric alcohols of secondary alcohols or tertiary alcohols, or derivatives thereof.

8. The coolant composition for a fuel cell according to any of claims 1 to 7, further containing an antirust addition agent.
